# EUROPÄISCHE PATENTSCHRIFT

(11) **EP 3 459 897 B1**
(45) Veröffentlichungstag und Bekanntmachung des Hinweises auf die Patenterteilung: **30.12.2020**
(21) Anmeldenummer: 18194807.6
(22) Anmeldetag: 17.09.2018
(51) Int. Cl.: B66C 1/02, B65G 47/91, B65B 35/18, B25J 1/02, B25J 15/04, B25J 15/06

(54) **BEDIENVORRICHTUNG FÜR EINE HANDHABUNGSVORRICHTUNG**
CONTROL DEVICE FOR A HANDLING DEVICE
DISPOSITIF DE COMMANDE POUR UN DISPOSITIF DE MANUTENTION

(30) Priorität: 25.09.2017 DE 102017122180
(43) Veröffentlichungstag der Anmeldung: 27.03.2019
(73) Patentinhaber: J. Schmalz GmbH, 72293 Glatten (DE)
(72) Erfinder: MAST, Jonas, 72270 Baiersbronn (DE); HEINZELMANN, Dominik, 72250 Freudenstadt (DE); HEINZMANN, Bernd, 72290 Lossburg (DE)
(74) Vertreter: DREISS Patentanwälte PartG mbB

(56) Entgegenhaltungen:
- WO-A2-2008/133974
- US-A1- 2008 174 076
- US-B1- 6 401 007

## Beschreibung

Die Erfindung betrifft eine Bedienvorrichtung für eine Handhabungsvorrichtung, mit einem Griffabschnitt und einer Kupplung für eine Greifeinrichtung zum Greifen von Gegenständen, wobei zumindest ein Teil der Kupplung um eine Drehachse drehbar am oder im Griffabschnitt angeordnet ist, so dass die Kupplung verschiedene Drehstellungen einnehmen kann. Außerdem betrifft die Erfindung eine Handhabungsvorrichtung zur Handhabung von Gegenständen.

Eine Bedienvorrichtung für eine Handhabungsvorrichtung der eingangs genannten Art ist bspw. aus DE 10 2008 028 205 C5 bekannt. Diese Bedienvorrichtung ermöglicht eine einhändige Bedienung eines Schlauchhebers. Handzuhabende Gegenstände können mit einem Sauggreifer gegriffen und durch die Bedienvorrichtung manövriert werden. Eine einfache Handhabung von Gegenständen ist ermöglicht.

Allerdings besteht Raum für Optimierungen. So lassen sich mit der Bedienvorrichtung unterschiedliche Greifeinrichtungen koppeln, jedoch nicht erkennen, so dass eine Handhabung von Gegenständen auch mit für die Handhabung ungeeigneten Greifeinrichtungen erfolgen kann. Eine im Ablauf effiziente und für eine Bedienperson sichere Handhabung von Gegenständen ist daher nicht hinreichend gewährleistet.

Die US 6 401 00 B1 offenbart eine Greifvorrichtung und eine Bedienvorrichtung mit einer Kupplung. An der Kupplungsseite der Greifeinrichtung ist mindestens ein Kupplungselement zur Ankopplung an eine Kupplung vorgesehen. Des Weiteren ist an der Kupplungsseite der Greifeinrichtung ein Informationsträger mit codierten Daten angeordnet. Die US 6 401 00 B1 offenbart den Oberbegriff des Anspruchs 1.

Der Erfindung liegt die Aufgabe zugrunde, bei der Handhabung von Gegenständen mit einfachen konstruktiven Mitteln eine zuverlässige Identifikation einer eingesetzten Greifeinrichtung zu ermöglichen. Es ist wünschenswert, dass bei der Handhabung für eine Bedienperson kein Mehraufwand entsteht.

Die Erfindung löst die voranstehende Aufgabe durch eine Bedienvorrichtung mit den Merkmalen des Anspruchs 1. Danach zeichnet sich die Bedienvorrichtung dadurch aus, dass an der der Kupplung zugewandten Seite des Griffabschnitts eine Leseeinrichtung zum Auslesen eines Informationsträgers mit codierten Daten angeordnet ist, wobei die Leseeinrichtung dazu eingerichtet ist, einen Informationsträger einer an der Kupplung angekoppelten Greifeinrichtung unabhängig von der Drehstellung der Kupplung relativ zum Griffabschnitt auszulesen.

Auf diese Weise ist mit der Bedienvorrichtung eine zuverlässige Identifikation von Greifeinrichtungen ermöglicht, da die Erkennung der Greifeinrichtung unabhängig von deren Drehstellung bezüglich des Griffabschnitts und damit der Bedienvorrichtung möglich ist. Dadurch ist in der Praxis eine durchgehende Identifikation geschaffen. Da die Identifikation einer Greifeinrichtung beim oder kurz nach dem Ankoppeln einer Greifeinrichtung an die Kupplung der Bedienvorrichtung erfolgen kann, entsteht für eine Bedienperson durch die Identifikation kein Mehraufwand. Durch Sicherstellung der richtigen Zuordnung der Greifeinrichtung ist eine effiziente und für eine Bedienperson sichere Handhabung von Gegenständen ermöglicht.

Insbesondere weist die Bedienvorrichtung eine Steuereinrichtung auf, die mit der Leseeinrichtung zusammenwirkt. In der Steuereinrichtung kann eine anstehende Handhabungsaufgabe und/oder die Art der handzuhabenden Gegenstände hinterlegt sein, so dass eine für die Handhabung ungeeignete Greifeinrichtung erkannt werden kann. Dies kann der Bedienperson signalisiert werden und/oder ein Koppeln der Greifeinrichtung mit der Bedieneinrichtung kann verhindert werden.

Die Kupplung kann infolge ihrer drehbaren Anordnung am oder im Greifabschnitt verschiedene Drehstellungen einnehmen. Dabei kann die Kupplung oder ein Teil der Kupplung, bspw. eine Kupplungsplatte, am oder im Griffabschnitt drehbar gelagert sein.

Im Konkreten kann der Griffabschnitt als Bediengriff ausgebildet sein. Die Leseeinrichtung kann an der der Kupplung zugewandten Seite angeordnet oder in den Griffabschnitt integriert, insbesondere in diesen eingebettet, sein.

Der Informationsträger enthält codierte, durch die Leseeinrichtung auslesbare Daten (Kodierung). Anhand dieser Daten kann ein Kopierschutz, eine richtige Zuordnung von Parametern, ein Auswerten der Laufzeit und/oder des Verschleißes des Greifers realisiert werden, insbesondere durch eine mit der Leseeinrichtung zusammenwirkende Steuerung.

Im Rahmen einer bevorzugten Ausgestaltung kann die Leseeinrichtung eine bezogen auf die Drehachse konzentrisch angeordnete Antenne zum Auslesen eines Transponders aufweisen. Ein Auslesevorgang ist dadurch auch bei schwierigen Umgebungsbedingungen, bspw. Dunkelheit, Staub oder Verunreinigungen, unabhängig von der Drehstellung der Greifeinrichtung ermöglicht. Der Auslesevorgang erfolgt drahtlos. Die auf dem Transponder gespeicherten Informationen (Kodierung) können durch die Antenne ausgelesen werden.

Im Konkreten kann ein RFID-Transponder als Informationsträger dienen. Die Leseeinrichtung kann zum Auslesen/Beschreiben des Transponders geeignet sein. Ein Auslesen/Beschreiben des Transponders kann mittels elektromagnetischer Wellen erfolgen. Hierzu kann die Leseeinrichtung eine Kommunikationseinheit zur Erzeugung elektromagnetischer Wellen aufweisen. Die Kommunikationseinheit kann mit der Antenne zusammenwirken.

In vorteilhafter Weise kann die Antenne als flächige Antenne ausgebildet sein, die Antenne kann ringförmig ausgebildet sein oder die Antenne kann mehrere separate Sektoren aufweisen. Damit ist ein Auslesen/Beschreiben des Transponders unabhängig von der Drehstellung der Greifeinrichtung bezogen auf die Bedienvorrichtung möglich. Die flächige Antenne kann in Form eines Polygons (polygonal), kreisförmig oder elliptisch ausgebildet sein. Die ringförmig ausgestaltete Antenne kann mehrere Windungen aufweisen. Bei den Sektoren kann es sich um separat zueinander angeordnete Kreissektoren handeln.

Alternativ oder ergänzend kann die Leseeinrichtung als Kamera zum Auslesen einer optischen oder optoelektronisch lesbaren Kodierung ausgebildet sein oder eine solche Kamera aufweisen, wobei die Kamera dazu eingerichtet ist, ein bezogen auf die Drehachse konzentrisches Bild aufzunehmen. Dadurch ist ebenfalls eine durchgehende Identifikation durch Auslesen codierter Daten (Kodierung) ermöglicht. Der Auslesevorgang erfolgt dabei auf optischem Wege, wobei ebenfalls mehrere Informationen übertragbar sind. Diese Variante benötigt vergleichsweise wenige Komponenten. Auf ein elektromagnetisches Wechselfeld kann verzichtet werden. Dies kann bei der Handhabung von Gegenständen mit elektrischen oder elektronischen Komponenten von Vorteil sein.

Im Rahmen einer bevorzugten Ausgestaltung kann die Kamera die optische Kodierung durch einen bezogen auf die Drehachse konzentrischen optischen Spalt aufnehmen. Auf diese Weise ist eine konzentrische Bildaufnahme mit einfachen konstruktiven Mitteln ermöglicht. Eine Identifikation der mit der Kodierung ausgestatteten Greifeinrichtung kann somit unabhängig von der Drehstellung der Greifeinrichtung erfolgen.

In zweckmäßiger Weise kann die Leseeinrichtung ein vorzugsweise ringförmiges Beleuchtungselement zur Beleuchtung der optischen Kodierung aufweisen. Damit ist eine zuverlässige Bilderzeugung auch bei unzureichenden Lichtverhältnissen möglich. Das Beleuchtungselement kann bezogen auf die Drehachse konzentrisch angeordnet sein. Das Beleuchtungselement kann einen insbesondere ringförmigen Lichtleiter aufweisen.

Im Konkreten kann die Kupplung als Schnellwechseleinrichtung ausgebildet sein. Auf diese Weise sind eine schnelle Ankopplung und ein schneller Austausch von Greifeinrichtungen möglich. Hierzu kann die Kupplung entsprechende Aufnahmen, bspw. Aufnahmeöffnungen, ein Zentrierelement, bspw. ein Zentrierzapfen, und/oder ein Verriegelungselement, bspw. ein Verriegelungsblech aufweisen.

Die Aufgabe wird auch durch eine Greifeinrichtung zum Greifen von Gegenständen mit den Merkmalen des nebengeordneten Anspruchs gelöst. Die Greifeinrichtung zeichnet sich dadurch aus, dass an der Kupplungsseite ein Informationsträger mit codierten Daten angeordnet ist.

Der Informationsträger enthält codierte, durch die Leseeinrichtung auslesbare Daten (Kodierung). Der Informationsträger kann daher zur Identifikation der Greifeinrichtung dienen, so dass diese eindeutig identifizierbar ist. Die codierten Daten können verschiedene Informationen zur Greifeinrichtung enthalten. Denkbar sind Informationen zur Identität (z.B. Seriennummer), der maximalen Hublast, der Art von zulässig zu greifenden Gegenständen, der Anzahl von Greifvorgängen (Pickzahl) und/oder der Einsatzdauer der Greifeinrichtung.

Die Greifeinrichtung kann als Sauggreifer ausgebildet sein. Der Informationsträger kann an der Kupplungsseite an der Oberfläche der Greifeinrichtung angeordnet oder in die Greifeinrichtung integriert, insbesondere eingebettet, sein.

Im Rahmen einer bevorzugten Ausgestaltung kann der Informationsträger als Transponder, insbesondere als RFID-Transponder, oder als optische oder optoelektronisch lesbare Kodierung ausgebildet sein, insbesondere als Barcode, QR-Code oder eine sonstige optische Kodierung in Form eines ein- oder zweidimensionalen Codes. Die Kodierung kann auf die Greifeinrichtung aufgedruckt oder auf einem Etikett oder einem Aufkleber aufgebracht sein. Durch den Informationsträger ist eine Vielzahl an Informationen zur Greifeinrichtung speicher- und übertragbar. Der Transponder kann derart eingerichtet sein, dass dieser lesbar und beschreibbar ist.

Die Aufgabe wird auch durch eine Handhabungsvorrichtung mit den Merkmalen des nebengeordneten Anspruchs gelöst.

Hinsichtlich der erzielbaren Vorteile wird auf die Ausführungen zur Bedienvorrichtung und/oder zur Greifeinrichtung verwiesen.

Die Handhabungsvorrichtung dient insbesondere zur manuellen (handgeführten) Handhabung von Gegenständen. Die Handhabungsvorrichtung kann als Seilzug, Kran oder Schlauchheber ausgebildet sein.

Die Erfindung wird Im Folgenden anhand der Figuren näher erläutert, wobei gleiche oder funktional gleiche Elemente ggf. nur einmal mit Bezugszeichen versehen sind. Es zeigen:
- Fig.1: eine Ausführungsbeispiel einer Bedienvorrichtung für eine Handhabungsvorrichtung;
- Fig.2: die Bedienvorrichtung aus Figur 1 mit einer flächig ausgebildeten Antenne;
- Fig.3: die Bedienvorrichtung aus Figur 1 mit einer ringförmig ausgebildeten Antenne;
- Fig.4: die Bedienvorrichtung aus Fig.1 mit einer Antenne mit mehreren Segmenten;
- Fig.5: ein Ausführungsbeispiel einer Greifeinrichtung vor einem Ankoppeln an die Bedienvorrichtung aus Fig.1 mit Greifeinrichtung in einer ersten Drehstellung;

- Fig.6: die Greifeinrichtung aus Fig.5 in einer zweiten Drehstellung; und
- Fig.7: ein Ausführungsbeispiel einer Handhabungsvorrichtung zur Handhabung von Gegenständen in einer schematischen Ansicht.

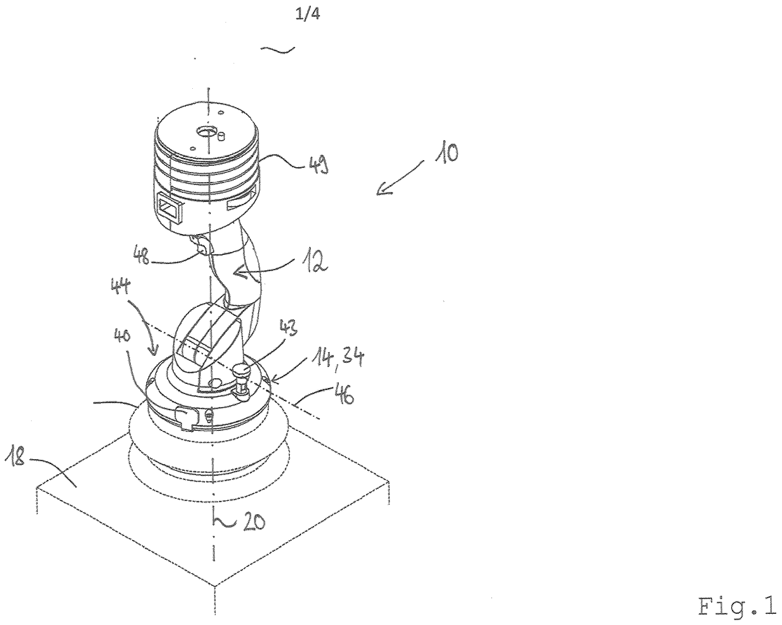

Figur 1 zeigt eine Bedienvorrichtung für eine Handhabungsvorrichtung 70, wobei die Bedienvorrichtung insgesamt mit dem Bezugszeichen 10 bezeichnet ist.

Die Bedienvorrichtung 10 weist einen Griffabschnitt 12 in Form eines Bediengriffs und eine Kupplung 14 für eine Greifeinrichtung 50 zum Greifen von Gegenständen 18 auf. Zumindest ein Teil der Kupplung 14 ist um eine Drehachse 20 drehbar am oder im Griffabschnitt 12 angeordnet, insbesondere drehbar gelagert, so dass die Kupplung 14 verschiedene Drehstellungen einnehmen kann.

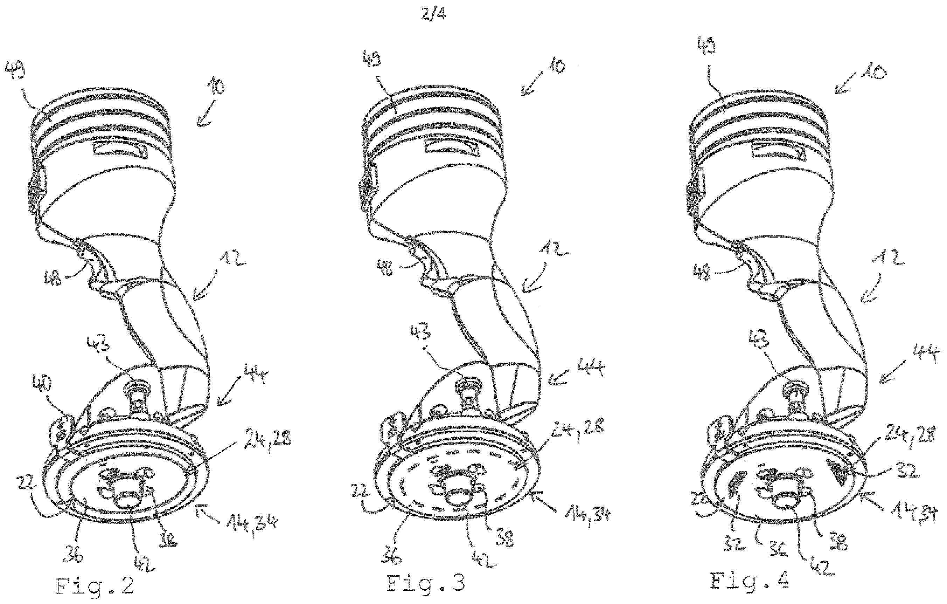

An der der Kupplung 14 zugewandten Seite 22 des Griffabschnitts 12 ist eine Leseeinrichtung 24 zum Auslesen eines Informationsträgers 60 angeordnet, der codierte Daten enthält (siehe Fig.2 bis Fig.4). Die Leseeinrichtung 24 ist dazu eingerichtet, einen Informationsträger 60 einer an der Kupplung 14 angekoppelten Greifeinrichtung 50 unabhängig von der Drehstellung der Kupplung 14 relativ zum Griffabschnitt 12 auszulesen.

Die Leseeinrichtung 24 weist eine bezogen auf die Drehachse 20 konzentrisch angeordnete Antenne 28 zum Auslesen des Informationsträgers 60 in Form eines Transponders 64 auf. Die Antenne 28 kann als flächige Antenne mit einem polygonalen, kreisförmigen oder elliptischen Querschnitt ausgebildet sein (siehe Fig.2). Alternativ hierzu kann die Antenne 28 ringförmig ausgebildet sein, insbesondere mit mehreren Windungen (siehe Fig.3). Außerdem kann die Antenne 28 mehrere separate Sektoren 32 aufweisen, insbesondere in Form von mehreren separaten Kreissektoren (siehe Fig.4).

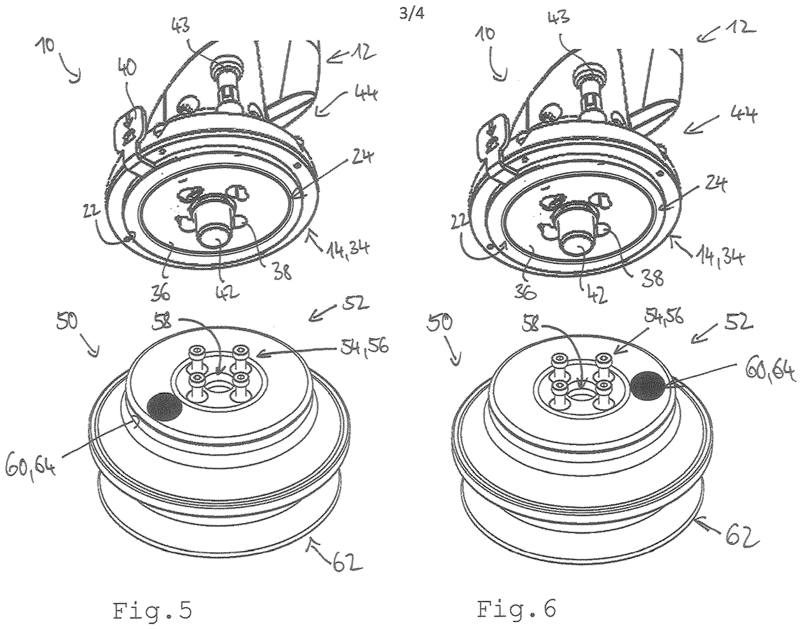

Die Kupplung 14 ist als Schnellwechseleinrichtung 34 ausgebildet (siehe Fig.5 und 6). Die Kupplung 14 weist eine Kupplungsplatte 36 mit Aufnahmeöffnungen 38 auf, an denen die Greifeinrichtung 50 über entsprechende Kupplungselemente angekoppelt werden kann.

Über eine Bedienlasche 40 lässt sich ein Sicherungsblech betätigen (nicht dargestellt), welches eine ungewollte Entkopplung der Greifeinrichtung 50 von der Bedienvorrichtung 10 insbesondere durch Hintergriff eines Kupplungselements verhindert.

Zudem ist ein Zentrierzapfen 42 vorgesehen, mittels dem die Greifeinrichtung 50 bezogen auf die Bedienvorrichtung 10 zentriert wird. Über einen Verriegelungsstift 43 lässt sich die Kupplungsplatte 36, die bezogen auf den Griffabschnitt 12 um die Drehachse 20 drehbar ist, in einer Drehstellung blockieren.

Der die Kupplung 14 beherbergende Kupplungsabschnitt 44 der Bedienvorrichtung 10 ist bezogen auf den Griffabschnitt 12 um eine Achse 46 verschwenkbar (siehe Figur 1). Der Griffabschnitt 12 weist einen Bedienknopf 48 (Abzug) auf, über den die Handhabungsvorrichtung 70 ansteuerbar ist. Die Bedienvorrichtung 10 weist eine Anschlusseinrichtung 49 auf, mit der die Bedienvorrichtung 10 an eine Handhabungsvorrichtung 70 angeschlossen werden kann, bspw. über einen Schlauchheber oder einen Seilzug.

Im Rahmen einer nicht dargestellten Ausführungsform kann die Leseeinrichtung 24 als Kamera zum Auslesen einer optischen Kodierung ausgebildet sein. Dabei ist die Kamera dazu eingerichtet, ein bezogen auf die Drehachse 20 konzentrisches Bild aufzunehmen. Die Kamera nimmt die optische Kodierung durch einen bezogen auf die Drehachse 20 konzentrischen optischen Spalt auf. Die Leseeinrichtung 24 weist ein vorzugsweise ringförmiges Beleuchtungselement zur Beleuchtung der optischen Kodierung auf.

Die Figuren 5 und 6 zeigen die Greifeinrichtung 50 zum Greifen von Gegenständen 18. Die Greifeinrichtung 50 ist als Sauggreifer ausgebildet, mit dem ein Gegenstand 18 greifbar ist und aufgrund von Unterdruck am Sauggreifer haftet.

An einer Kupplungsseite 52 der Greifeinrichtung 50 ist mindestens ein Kupplungselement 54 zur Ankopplung an die Kupplung 14 der Bedienvorrichtung 10 vorgesehen. Das Kupplungselement 54 ist als Verriegelungszapfen 56 ausgebildet.

Zudem ist eine Zentrieröffnung 58 vorgesehen, die zur Aufnahme des Zentrierzapfens 42 der Bedienvorrichtung 10 dient. Ein Greifen eines Gegenstands 18 erfolgt auf der der Kupplungsseite 52 gegenüberliegenden Seite (Greifseite 62).

An der Kupplungsseite 52 ist der Informationsträger 60 angeordnet, der codierte Daten enthält. Die codierten Daten können Informationen zur Identität, der maximalen Hublast, der Art von zulässig zu greifenden Gegenständen, der Anzahl von Greifvorgängen (Pickzahl) und/oder der Einsatzdauer der Greifeinrichtung enthalten.

Der Informationsträger 60 kann als Transponder 64, insbesondere als RFID-Transponder 64, ausgebildet sein. Der Transponder 64 kann an der Kupplungsseite 52 in die Greifeinrichtung 50 integriert, insbesondere in die Greifeinrichtung 50 eingebettet, sein. Der Transponder 64 kann lesbar und beschreibbar ausgebildet sein, insbesondere durch die Leseeinrichtung 24.

Bei nicht dargestellten Ausführungsformen kann der Informationsträger 60 als optische oder optoelektronisch lesbare Kodierung ausgebildet sein, bspw. als Barcode oder QR-Code. Die Kodierung kann auf die Greifeinrichtung 50 aufgedruckt oder auf einem Etikett oder ein Aufkleber aufgebracht sein.

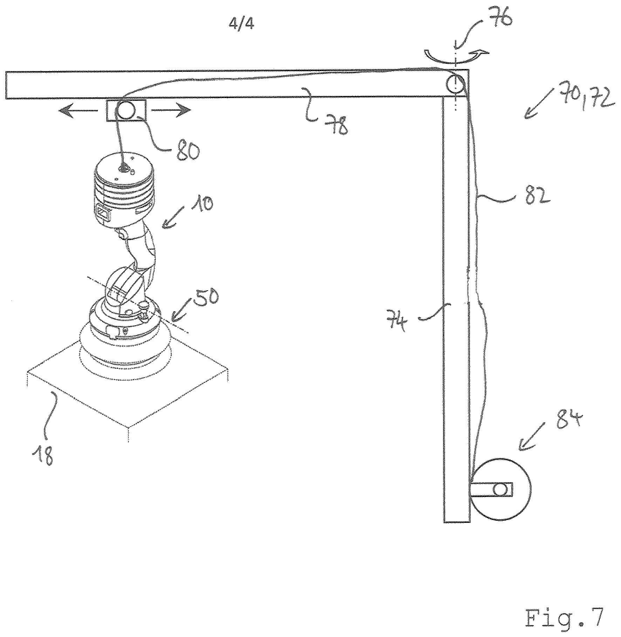

Figur 7 zeigt eine Handhabungsvorrichtung 70 zur Handhabung von Gegenständen 18. Die Handhabungsvorrichtung 70 weist die beschriebene Bedienvorrichtung 10 auf. Zudem weist die Handhabungsvorrichtung 70 die beschriebene Greifeinrichtung 50 auf. Die Greifeinrichtung 50 ist an der Bedienvorrichtung 10 angekoppelt.

Die Handhabungsvorrichtung 70 ist im vorliegenden Ausführungsbeispiel als Kran 72 ausgebildet. Der Kran 72 weist einen Mast 74 auf, der um eine Achse 76 drehbar ist.

Am Mast 74 ist ein Ausleger 78 befestigt, an dem eine Laufkatze 80 verfahren werden kann. Die Bedienvorrichtung 10 ist an einem Seil 82 befestigt, welches mit einer Seilwinde 84 der Handhabungsvorrichtung 70 zusammenwirkt.

## Patentansprüche

1. Bedienvorrichtung (10) für eine Handhabungsvorrichtung (70), mit einem Griffabschnitt (12) und einer Kupplung (14) für eine Greifeinrichtung (50), wobei zumindest ein Teil der Kupplung (14) um eine Drehachse (20) drehbar am oder im Griffabschnitt (12) angeordnet ist, so dass die Kupplung (14) verschiedene Drehstellungen einnehmen kann, wobei an der der Kupplung (14) zugewandten Seite (22) des Griffabschnitts (12) eine Leseeinrichtung (24) zum Auslesen eines Informationsträgers (60) mit codierten Daten angeordnet ist, **dadurch gekennzeichnet, dass** die Leseeinrichtung (24) dazu eingerichtet ist, einen Informationsträger (60) einer an der Kupplung (14) angekoppelten Greifeinrichtung (50) unabhängig von der Drehstellung der Kupplung (14) auszulesen.

2. Bedienvorrichtung (10) nach Anspruch 1, **dadurch gekennzeichnet, dass** die Leseeinrichtung (24) eine bezogen auf die Drehachse (20) konzentrisch angeordnete Antenne (28) zum Auslesen eines Transponders (64) aufweist.

3. Bedienvorrichtung (10) nach Anspruch 2, **dadurch gekennzeichnet, dass** die Antenne (28) als flächige Antenne ausgebildet ist, oder dass die Antenne (28) ringförmig ausgebildet ist oder dass die Antenne (28) mehrere separate Sektoren (32) aufweist.

4. Bedienvorrichtung (10) nach Anspruch 1, **dadurch gekennzeichnet, dass** die Leseeinrichtung (24) als Kamera zum Auslesen einer optischen oder optoelektronisch lesbaren Kodierung ausgebildet ist, wobei die Kamera dazu eingerichtet ist, ein bezogen auf die Drehachse (20) konzentrisches Bild aufzunehmen.

5. Bedienvorrichtung (10) nach Anspruch 4, **dadurch gekennzeichnet, dass** die Kamera die optische Kodierung durch einen bezogen auf die Drehachse (20) konzentrischen optischen Spalt aufnimmt.

6. Bedienvorrichtung (10) nach Anspruch 4 oder 5, **dadurch gekennzeichnet, dass** die Leseeinrichtung (24) ein vorzugsweise ringförmiges Beleuchtungselement zur Beleuchtung der optischen Kodierung aufweist.

7. Bedienvorrichtung (10) nach einem der voranstehenden Ansprüche, **dadurch gekennzeichnet, dass** die Kupplung (14) als Schnellwechseleinrichtung (34) ausgebildet ist.

8. Handhabungsvorrichtung (70) zur Handhabung von Gegenständen, mit einer Bedienvorrichtung (10) nach einem der Ansprüche 1 bis 7 und mit einer Greifeinrichtung (50), wobei an einer Kupplungsseite (52) der Greifeinrichtung (50) mindestens ein Kupplungselement (54) zur Ankopplung an eine Kupplung (14) einer Bedienvorrichtung (10) vorgesehen ist, **dadurch gekennzeichnet, dass** an der Kupplungsseite (52) ein Informationsträger (60) mit codierten Daten angeordnet ist.

## Claims

1. Operating device (10) for a handling device (70), having a gripping section (12) and a coupling (14) for a gripping device (50), at least a part of the coupling (14) being located at or in the gripping section (12), so as to be rotatable about an axis of rotation (20), so that the coupling (14) can assume different rotational positions, wherein a reading device (24) for reading out an information carrier (60) with coded information is located at the side (22) of the gripping section (12) facing the coupling (14), **characterized in that** the reading device (24) is configured so as to read an information carrier (60) of a gripping device (50) coupled to the coupling (14) regardless of the rotational position of the coupling (14).

2. Operating device (10) according to Claim 1, **characterized in that** the reading device (24) has an antenna (28) for reading a transponder (64), where the antenna (28) is positioned so that it is concentric with the axis of rotation (20).

3. Operating device (10) according to Claim 2, **characterized in that** the antenna (28) is configured as a laminar antenna (28), or that the antenna (28) is ring-shaped or that the antenna (28) has several separate sectors.

4. Operating device (10) according to Claim 1, **characterized in that** the reading device (24) is a camera for reading an optical or optoelectronically readable code, with the camera additionally being configured to capture an image that is concentric with the axis of rotation (20).

5. Operating device (10) according to Claim 4, **characterized in that** the camera captures the optical code through an optical gap that is concentric with the axis of rotation (20) .

6. Operating device (10) according to Claims 4 or 5, **characterized in that** the reading device (24) comprises a preferably circular lighting element for lighting the optical coding.

7. Operating device (10) according to one of the foregoing claims, **characterized in that** the coupling (14) is configured as a quick-change mechanism (34).

8. Handling device (70) for handling objects, comprising an operating device (10) according to one of the Claims 1 to 7 and a gripping device (50), wherein at least one coupling element (54) for connecting to a coupling (14) of an operating device (10) is provided at a coupling side (52) of the gripping device (50), **characterized in that** an information carrier (60) with coded data is located at the coupling side (52).

## Revendications

1. Dispositif de commande (10) pour un dispositif de manipulation (70), comprenant une section de poignée (12) et un accouplement (14) pour un dispositif de préhension (50), dans lequel au moins une partie de l'accouplement (14) est agencé sur ou dans ladite section de poignée (12) de manière à pouvoir tourner autour d'un axe de rotation (20) de sorte que l'accouplement (14) peut prendre diverses positions de rotation, dans lequel un dispositif de lecture (24) destiné à lire un support d'informations (60) comprenant des données codées est agencé sur le côté (22) de la section de poignée (12) qui montre vers l'accouplement (14), **caractérisé par le fait que** ledit dispositif de lecture (24) est configuré pour lire un support d'informations (60) d'un dispositif de préhension (50) couplé à l'accouplement (14), indépendamment de la position de rotation de l'accouplement (14).

2. Dispositif de commande (10) selon la revendication 1,
**caractérisé par le fait que** le dispositif de lecture (24) comprend une antenne (28) disposée concentriquement par rapport à l'axe de rotation (20) et destinée à lire un transpondeur (64).

3. Dispositif de commande (10) selon la revendication 2,
**caractérisé par le fait que** l'antenne (28) est réalisée sous forme d'antenne plate, ou que l'antenne (28) est conçue en forme d'anneau ou que l'antenne (28) comprend plusieurs secteurs (32) séparés.

4. Dispositif de commande (10) selon la revendication 1,
**caractérisé par le fait que** le dispositif de lecture (24) est conçu en tant que caméra de lecture d'un codage optique ou lisible par voie optoélectronique, dans lequel la caméra est agencée pour enregistrer une image concentrique par rapport à l'axe de rotation (20).

5. Dispositif de commande (10) selon la revendication 4,
**caractérisé par le fait que** la caméra enregistre le codage optique à travers une fente optique qui est concentrique par rapport à l'axe de rotation (20).

6. Dispositif de commande (10) selon la revendication 4 ou 5, **caractérisé par le fait que** le dispositif de lecture (24) comprend un élément d'éclairage, de préférence en forme d'anneau, pour éclairer le codage optique.

7. Dispositif de commande (10) selon l'une quelconque des revendications précédentes, **caractérisé par le fait que** l'accouplement (14) est réalisé en tant que dispositif de changement rapide (34).

8. Dispositif de manipulation (70) destiné à manipuler des objets, comprenant un dispositif de commande (10) selon l'une quelconque des revendications 1 à 7 ainsi qu'un dispositif de préhension (50), dans lequel au moins un élément de couplage (54) pour le couplage à un accouplement (14) d'un dispositif de commande (10) est prévu sur un côté de couplage (52) du dispositif de préhension (50), **caractérisé par le fait qu'**un support d'informations (60) comprenant des données codées est disposé sur le côté de couplage (52).
